# EUROPEAN PATENT SPECIFICATION

(11) **EP 2 401 148 B1**
(45) Date of publication and mention of the grant of the patent: **23.01.2013**
(21) Application number: 09789483.6
(22) Date of filing: 27.02.2009
(51) Int. Cl.: B32B 27/08, B32B 27/16, B32B 27/30, B32B 27/32, C08L 23/08, C08L 29/04, C08L 27/12, C08L 27/16, C08L 27/18

(54) **PLASMA TREATED EVOH MULTILAYER FILM**
PLASMABEHANDELTE MEHRLAGIGE EVOH-FOLIE
FILM MULTICOUCHE D'EVOH TRAITÉ PAR PLASMA

(43) Date of publication of application: 04.01.2012
(73) Proprietor: ExxonMobil Oil Corporation, Baytown, TX 77520-2101 (US)
(72) Inventor: PIGNATELLI, Massimo, L-5232 Sandweiler (LU); PIRE, Stephane, Maastricht 6224D4 (NL)
(74) Representative: Troch, Geneviève
(86) International application number: PCT/US2009/035417
(87) International publication number: WO 2010/098762

(56) References cited:
- WO-A-2006/128589
- US-A- 5 460 760

## Description

### FIELD OF THE INVENTION

The present invention relates to barrier film structures and, more particularly, to film structures having ethylene vinyl alcohol polymer ("EVOH") and fluoropolymer in skin layer, plasma treatment and followed by metallization. The barrier film structures of this disclosure may be used in flexible packaging applications.

### BACKGROUND OF THE INVENTION

Polymeric film structures are used in many commercial applications. One particularly important application is the food packaging industry. Film structures employed in the food packaging industry are chosen and/or designed to provide characteristics necessary for proper food containment. Such characteristics include water vapor barrier properties, oxygen and gas barrier properties and flavor and aroma barrier properties. One commonly employed structure includes a flexible and durable multilayer polymeric film substrate that provides the film structure with structural integrity and water vapor barrier properties, and at least one coating adhered thereto that provides the film structure with oxygen, gas barrier and flavor aroma barrier properties.

For example, one of the outermost layers ("skin layer") of the multilayer film structure may be used to form a seal or a barrier. The seal may be heat-sealable, pressure-sealable, or may include a sealing agent such as an adhesive. While the term "sealant skin" is used to describe this layer, an adhesive is not required. The sealant skin layer may comprise at least one of polylactic acid, EVOH, or high density polyethylene.

Fluoropolymer may be added to the skin layer as processing aid to allow trim recycling and/or improve the metal appearance in the metallization by reducing die lines and scratches. However, the addition of fluoropolymer in the EVOH skin layer negatively affects oxygen and water vapor barriers. There is a need to improve or maintain both oxygen and water vapor barriers properties of a film structure having fluoropolymer in the EVOH skin layer.

One or both of the outer exposed surfaces of the film may be surface-treated to increase the surface energy of the film to render the film receptive to metallization, coatings, printing inks, and/or lamination. The surface treatment can be carried out according to one of the methods known in the art, including, but are not limited to, corona discharge, flame treatment, plasma treatment, chemical treatment, or treatment by means of a polarized flame. However, surface treatment is not known to have any impact on barrier properties of multilayer films.

This disclosure surprisingly discovered that plasma treatment improves both oxygen and water vapor barrier properties of a film structure having fluoropolymer in the EVOH skin layer.

### SUMMARY OF THE INVENTION

The present invention, which addresses the need in the art, relates to a polymeric film structure having improved barrier characteristics. The film structure is produced by the process of co-extrusion of a multilayer film with a skin layer comprising EVOH and fluoropolymer. The film structure is then oriented in at least one of machine direction (MD) and traverse direction (TD). The outermost surface of the EVOH/fluoropolymer layer of oriented film structure is then plasma treated prior to vacuum depositing metal(s) on it.

In some embodiments, the plasma treatment is carried out with N₂, Argon, or both. In other embodiments, the metal coating is made by vacuum deposit at least one of aluminum, gold, or silver.

As a result, the present invention provides a plasma treated multilayer film having a skin layer comprising EVOH and fluoropolymer, wherein the plasma treated multilayer film has higher oxygen and water barrier properties than an untreated film structure with same film structure. In another embodiment, the plasma treated multilayer film has similar oxygen and water barrier properties as an untreated film structure with same film structure without addition of fluoropolymer in the EVOH skin layer. Therefore, the present invention provides multilayer film structures having good oxygen and water barrier properties, improving the metal appearance in the metallization by reducing die lines and scratches, and allowing trim recycling when EVOH used has high thermal stability, all at the same time.

### DETAILED DESCRIPTION OF THE INVENTION

The present invention, which addresses the need in the art, relates to a polymeric film structure having improved barrier characteristics. The film structure is produced by the process of co-extrusion of a multilayer film with at least one skin layer comprising EVOH and fluoropolymer. The film structure is then oriented in at least one of machine direction (MD) and traverse direction (TD). The outermost surface of the EVOH/fluoropolymer layer of oriented film structure is then plasma treated in a metallization chamber prior to vacuum depositing metal(s) on it.

Various specific embodiments, versions, and examples are described herein, including exemplary embodiments and definitions that are adopted for purposes of understanding the claimed invention. While the following detailed description gives specific preferred embodiments, those skilled in the art will appreciate that these embodiments are exemplary only, and that the invention can be practiced in other ways. For purposes of determining infringement, the scope of the disclosure will refer to any one or more of the appended claims, including their equivalents, and elements or limitations that are equivalent to those that are recited. Any reference to the "invention" may refer to one or more, but not necessarily all, of the inventions defined by the claims.

As used herein, the term "monomer" is a small molecule that may become chemically bonded to other monomers to form a polymer. Examples of monomers include olefinic monomers, such as, ethylene, propylene, butylenes, 1-hexene, styrene, and 1-octene, acrylic monomers, such as acrylic acid, methyl methacrylate, and acrylamide, amino acid monomers, and glucose monomers.

As used herein, the term "polymer" refers to the product of a polymerization reaction, and is inclusive of homopolymers, copolymers, terpolymers, etc.

As used herein, unless specified otherwise, the term "copolymer(s)" refers to polymers formed by the polymerization of at least two different monomers. For example, the term "copolymer" includes the copolymerization reaction product of ethylene and an alphaolefin (α-olefin), such as 1-hexene. However, the term "copolymer" is also inclusive of, for example, the copolymerization of a mixture of ethylene, propylene, 1-hexene, and 1-octene.

As used herein, the term "thermoplastic" includes only those thermoplastic materials that have not been functionalized or substantially altered from their original chemical composition. For example, as used herein, polypropylene, ethylene-propylene copolymers, propylene α -olefin copolymers, polyethylene and polystyrene are thermoplastics. However, maleated polyolefins are not within the meaning of thermoplastic as used herein.

As used herein, weight percent ("wt. %"), unless noted otherwise, means a percent by weight of a particular component based on the total weight of the mixture containing the component. For example, if a mixture or blend contains three grams of compound A and one gram of compound B, then the compound A comprises 75 wt.% of the mixture and the compound B comprises 25 wt.%. As used herein, parts per million (ppm), unless noted otherwise, means parts per million by weight.

The film structure of this disclosure comprises a film substrate and at least one skin layer. The film substrate is made from at least one polyolefins. One particularly preferred polyolefin is polypropylene. The skin layer comprises EVOH polymer and fluoropolymer. The skin layer is then plasma treated, preferably in the vacuum chamber of the metallization, prior to the metallization step.

### Core Layer

The core layer of a multilayered film is commonly the thickest layer and provides the foundation of the film. The core layer may comprise a polyolefin, such as polypropylene or polyethylene with or without cavitating agent.

The core layer may further comprise one or more additives. Preferred additives for the core layer include, but are not limited to, hydrocarbon resin(s), hydrocarbon wax(es), opacifying or coloring agent(s), slip additive(s), and cavitating agent(s).

### Skin layer

A skin layer is generally the outermost layer of the multilayer film. The skin layer may be contiguous to the core layer, or alternatively may be contiguous to one or more other layers, such as, a tie layer.

The skin layer may be provided to improve the film's barrier properties, processability, printability, and compatibility for metallization, and coating. The skin layer of this disclosure comprises EVOH and fluoropolymer. In preferred embodiments, the skin layer of this disclosure consists essentially of EVOH and fluoropolymer.

The skin layer may further comprise thermoplastic. In some embodiments, the thermoplastic comprises at least one of polyethylene, polypropylene, ethylene-propylene copolymer, ethylene-propylene-butylene terpolymer, and propylene-butylene copolymer.

The skin layer may further comprise additives such as, for example, anti-block agents, anti-static agents, slip agents, cavitating agent, and combinations thereof.

Fluoropolymers may be used as processing aid in the process of making films, which have been described in many patents including U.S. Patent Nos. 6,780,481, 6,040,124, 5,587,429, 5,089,200 and 6,248,442.

The fluoropolymers useful in this disclosure are those that are molten at the temperatures used to extrude the host polymer, such as EVOH. They comprise interpolymerized units derived from at least one fluorinated, ethylenically unsaturated monomer, preferably two or more monomers, of the formula

RCF=C(R)₂ (I)

wherein R is selected from H, F, Cl, alkyl of from 1 to 8 carbon atoms, aryl of from 1 to 8 carbon atoms, cyclic alkyl of from 1 to 10 carbon atoms, or perfluoroalkyl of from 1 to 8 carbon atoms or a functional group that may contain 1 or more hetero atoms. The R group preferably contains from 1 to 3 carbon atoms. In this monomer each R group may be the same as each of the other R groups. Alternatively, each R group may be different from one or more of the other R groups.

The fluoropolymers may also comprise a copolymer derived from the interpolymerization of at least one formula I monomer with at least one nonfluorinated, copolymerizable comonomer having the formula

(R¹)₂C=C(R¹)₂ (II)

wherein each R¹ is independently selected from H, Cl, or an alkyl group of from 1 to 8 carbon atoms, a cyclic alkyl group of from 1 to 10 carbon atoms, or an aryl group of from 1 to 8 carbon atoms. R¹ preferably contains from 1 to 3 carbon atoms.

Representative examples of useful fluorinated formula I monomers include, but are not limited to, vinylidene fluoride, tetrafluoroethylene, hexafluoropropylene, chlorotrifluoroethylene, 2-chloropentafluoropropene, dichlorodifluoroethylene, 1,1-dichlorofluoroethylene, and mixtures thereof. Perfluoro-1,3-dioxoles may also be used. The perfluoro-1,3-dioxole monomers and their copolymers are described in U.S. Pat. No. 4,558,141 (Squires).

Representative examples of useful formula II monomers include ethylene, propylene, etc.

Especially useful fluoropolymers include those derived from the interpolymerization of two or more different formula I monomers and optionally one or more formula I monomers with one or more formula II monomers. Examples of such polymers are those derived from interpolymerized units derived from vinylidene fluoride (VDF) and hexafluoropropylene (HFP); and those derived from tetrafluoroethylene (TFE) and at least 5 wt. % of at least one copolymerizable comonomer other than TFE. This latter class of fluoropolymers includes polymers of interpolymerized units derived from TFE and HFP; polymers of interpolymerized units derived from TFE, HFP, and VDF; polymers of interpolymerized units derived from TFE, HFP and a formula II monomer; and polymers derived from interpolymerized units derived from TFE and a formula II monomer.

Examples of useful commercially available fluoropolymers include DYNAMAR^{™} FX 9613, DYNEON^{™} THV 200 and DYNEON^{™} THV 400 all available from Dyneon LLC, Oakdale, Minn. Other useful commercially available materials include the KYNAR^{™} fluoropolymers, such as KYNAR^{™} FLEX^{®} 2821, available from Solvay and the AFLAS^{™} fluoropolymers available from Asahi Glass.

EVOH refers to ethylene vinyl alcohol copolymers which are well known to exhibit good oxygen barrier properties. Such ethylene vinyl alcohol copolymers have been described in many patents including U.S. Patent Nos. 3,975,463 and 4,468,427. The high barrier layer preferably includes from at least about 55% by weight, preferably at least about 80% by weight, more preferably at least about 90% by weight, of EVOH copolymer containing from about at least 48 mol.% of ethylene comonomer. Commercially available EVOH that can be used to prepare the high barrier layer of the present invention include EVALT^{™} G156B, G176, F104 or L101 which can be obtained from EVALCA.

The skin layer of this disclosure comprises EVOH and fluoropolymer. In some embodiments, the amount of fluoropolymer is in the range of 1 wppm to 10000 wppm, preferably in the range of 10 wppm to 1000 wppm, more preferable in the range of 100 wppm to 500 wppm.

### Orientation

The film may be uniaxially or biaxially oriented. Orientation in the direction of extrusion is known as machine direction ("MD") orientation. Orientation perpendicular to the direction of extrusion is known as transverse direction ("TD") orientation. Orientation may be accomplished by stretching or pulling a film first in the MD followed by the TD. Orientation may be sequential or simultaneous, depending upon the desired film features. Preferred orientation ratios are commonly from between about three to about seven times in the MD and between about four to about ten times in the TD.

Blown films may be oriented by controlling parameters such as take up and blow up ratio. Cast films may be oriented in the MD direction by take up speed, and in the TD through use of tenter equipment. Blown films or cast films may also be oriented by tenter-frame orientation subsequent to the film extrusion process, in one or both directions. Typical commercial orientation processes are biaxially oriented polypropylene (BOPP) tenter process and LISIM technology.

### Surface Treatment

One or both of the outer exposed surfaces of the film may be surface-treated to increase the surface energy of the film to render the film receptive to metallization, coatings, printing inks, and/or lamination. The surface treatment can be carried out according to one of the methods known in the art. Preferably, the EVOH/fluoropolymer skin layer of the film is plasma treated prior to the metallization. The plasma treatment greatly improves film's barrier properties, such as OTR and WVTR.

### Metallization

One or both of the outer exterior surfaces of the film may be metallized to form the metallized layer using conventional methods, such as vacuum deposition of a metal layer such as aluminum, copper, silver, chromium, or mixtures thereof. In a preferred embodiment, the metallized layer metal is aluminum.

### Process of making the films of this disclosure

Films according to the present disclosure may be prepared by any suitable means. Preferably, the film is co-extruded, oriented, and then prepared for its intended use such as by coating, printing, slitting, or other converting methods. Preferred methods comprise co-extruding, then casting and orienting the film.

In some embodiments, the film may be formed by co-extruding the core layer , the skin layer of EVOH/fluoropolymer, optionally any additional layers through a flat sheet extruder die at a temperature in the range of 200°C to 260°C, casting the film onto a cooling drum and quenching the film. The sheet is then stretched 3 to 7 times its original size, in the machine direction (MD), followed by stretching 4 to 10 times its original size in the transverse direction (TD). The film is then wound onto a reel. Prior to metallization, the film is plasma treated.

### Industrial Application

In some embodiments, the film of this disclosure may be used in flexible packaging and labeling applications.

The film of this disclosure has an OTR measured at 22.8°C (73°F) 0% RH at least 1% lower, preferably at least 10% lower, more preferably at least 20% lower, even more preferably at least 40% lower, yet even more preferably at least 50% lower, and most preferably at least 70% lower, than the OTR of a same film without the plasma treatment step and an WVTR measured at 37.8°C (100°F) 90% RH at least 1% lower, preferably at least 10% lower, more preferably at least 20% lower, even more preferably at least 40% lower, yet even more preferably at least 50% lower, and most preferably at least 70% lower, than the WVTR of a same film without the plasma treatment step.

In other embodiments, the film of this disclosure has an OTR measured at 22.8°C (73°F) 0% RH equal or less than the OTR of a same film without said fluoropolymer and the plasma treatment step and an WVTR measured at 37.8°C (100°F) 90% RH equal or less than the WVTR of a same film without said fluoropolymer and the plasma treatment step.

The present disclosure will be explained in more detail referring to Examples below without intention of restricting the scope of the present disclosure.

### EXAMPLES

Water vapor transmission rates (WVTR) were measured according to ASTM F-1249 procedure. Oxygen transmission rates (OTR) were measured according to ASTM D3985 test procedure. Optical density (OD) results were measured according to American National Standards Institute (ANSI) ANSI/NAPM IT2.19 test procedure.

Multilayer biaxially oriented polypropylene films were used for the testing. Sample 1A was a multilayer biaxially oriented polypropylene film with an EVOH (EVAL^{™} G156B) skin layer and metallized with vacuum deposition of aluminum. Sample 1B was made by adding 300 ppm by weight of fluoropolymer (Kynar FLEX^{®} 2821) in the EVOH layer of the sample 1A.

Samples 2B, 3B, 4B and 5B were multilayer biaxially oriented polypropylene film with an EVOH (EVAL^{™} G176) and the EVOH layer having 300 ppm by weight of fluoropolymer (Kynar FLEX^{®} 2821). Samples 1C, 2C, 3C, 4C and 5C were made by plasma treatment of samples 1B, 2B, 3B, 4B and 5B prior to the metallization step. Plasma treatments were performed using 1) DC plasma at 450 mt/min line speed, 6-7 kw power and a gas mixture of Nitrogen and Argon in 60-40 percentage, or 2) AC plasma at 450 mt/min line speed, 6-7 kw power, a gas mixture of Nitrogen and Argon in 90-10 or 80/20 percentage, prior to the metallization step.

The following table lists barrier properties of samples 1A-C, 2B-C, 3B-C, 4B-C and 5B-C.

| | **WVTR** | **OTR** |
|---|---|---|
| | 37.8°C (100F), 90%RH | 22.8°C (73F), 0%RH |
| | g/m²/day | cc/m²/day |
| 1A | 0.09 | 0.08 |
| 1B | 0.16 | 0.11 |
| 1C* | 0.09 | 0.07 |
| 2B | 0.14 | 0.29 |
| 2C* | 0.07 | 0.05 |
| 3B | 0.24 | 0.32 |
| 3C* | 0.13 | 0.13 |
| 4B | 0.26 | 0.16 |
| 4C* | 0.23 | 0.12 |
| 5B | 0.17 | 0.17 |
| 5C* | 0.06 | 0.16 |

The WVTR and OTR results for the plasma treated samples listed in the following table were average of AC and DC plasma treatments.

As already mentioned earlier, the addition of fluoropolymer in the EVOH skin (sample 1B) has a detrimental effect on the barriers after metallization: average WVTR and OTR values are higher than the ones of the film without fluoropolymer.

The use of plasma treatment during the metallization of multilayer biaxially oriented polypropylene film of sample 1B containing fluoropolymer has brought the average barrier value of this film back to the level obtained without fluoropolymer (sample 1A).

As is readily apparent from the data set forth in the above table, Sample 5 (metallized) formed in accordance with the present invention exhibits excellent oxygen barrier properties.

## Claims

1. A process of making multilayer polymer film, comprising:
(a) forming a film substrate having a core layer comprising polyolefin and a skin layer comprising EVOH and at least 1 wppm of fluoropolymer;
(b) treating said skin layer with plasma; then
(c) metallizing said plasma treated film substrate with metal.

2. The process according to claim 1, wherein said skin layer comprises EVOH and at least 100 wppm of fluoropolymer.

3. The process according to claim 1 or 2, wherein said core layer comprises polypropylene.

4. The process according to any preceding claim, wherein plasma treating step is conducted in a metallization vacuum chamber of step (c).

5. The process according to claim 4, wherein said plasma treating step is conducted with at least one of nitrogen or argon.

6. The process according to any preceding claim, wherein said core layer further comprises cavitating agent.

7. The process according to any preceding claim, wherein said polyolefin is polypropylene.

8. A film structure produced by the process of any preceding claim.

9. The film of claim 8, wherein said film has an OTR measured at 22.8°C (73°F) 0% RH at least 1% lower than the OTR of a same film without the plasma treatment step and an WVTR measured at 37.8°C (100°F) 90% RH at least 1% lower than the WVTR of a same film without the plasma treatment step.

10. The film of claim 8 or 9, wherein said film has an OTR measured at 22.8°C (73°F) 0% RH equal or less than the OTR of a same film without said fluoropolymer and the plasma treatment step and an WVTR measured at 37.8°C (100°F) 90% RH equal or less than the WVTR of a same film without said fluoropolymer and the plasma treatment step.

## Patentansprüche

1. Verfahren zur Herstellung einer mehrschichtigen Polymerfolie, bei dem:
(a) ein Foliensubstrat gebildet wird, das eine Kernschicht, die Polyolefin umfasst, und eine Außenschicht aufweist, die EVOH und mindestens 1 Gew.-ppm Fluorpolymer umfasst,
(b) die Außenschicht mit Plasma behandelt wird und dann
(c) das mit Plasma behandelte Foliensubstrat mit Metall metallisiert wird.

2. Verfahren nach Anspruch 1, bei dem die Außenschicht EVOH umfasst und mindestens 100 Gew.-ppm Fluorpolymer.

3. Verfahren nach Anspruch 1 oder 2, bei dem die Kernschicht Polypropylen umfasst.

4. Verfahren nach einem der vorhergehenden Ansprüche, bei dem die Plasmabehandlungsstufe in einer Metallisierungsvakuumkammer der Stufe (c) durchgeführt wird.

5. Verfahren nach Anspruch 4, bei dem die Plasmabehandlungsstufe mit mindestens einem von Stickstoff oder Argon durchgeführt wird.

6. Verfahren nach einem der vorhergehenden Ansprüche, bei dem die Kernschicht ferner ein Hohlraum bildendes Mittel umfasst.

7. Verfahren nach einem der vorhergehenden Ansprüche, bei dem das Polyolefin Polypropylen ist.

8. Folienstruktur hergestellt nach dem Verfahren gemäß einem der vorhergehenden Ansprüche.

9. Folie nach Anspruch 8, wobei die Folie eine OTR (Sauerstoffdurchlassrate), gemessen bei 22,8°C (73°F) bei 0 % RH (relative Feuchtigkeit), von mindestens 1 % niedriger als die OTR des selben Films ohne die Plasmabehandlungsstufe und eine WVTR (Wasserdampfdurchlassrate), gemessen bei 37,8°C (100°F) bei 90 % RH, aufweist, die mindestens 1 % niedriger ist als die WVTR des gleichen Films ohne die Plasmabehandlungsstufe.

10. Folie nach Anspruch 8 oder 9, wobei die Folie eine OTR, gemessen bei 22,8°C (73°F) bei 0 % RH, aufweist, die gleich oder geringer ist als die OTR des gleichen Films ohne das Fluorpolymer und die Plasmabehandlungsstufe, und eine WVTR, gemessen bei 37,8°C (100°F) bei 90 % RH, die gleich oder geringer ist als die WVTR des gleichen Films ohne das Fluorpolymer und die Plasmabehandlungsstufe.

## Revendications

1. Procédé de fabrication de film de polymère multi-couche, comprenant :
(a) la formation d'un substrat en film possédant une couche centrale comprenant une polyoléfine et une couche de peau comprenant de l'EVOH et au moins 1 ppm en poids de fluoropolymère ;
(b) le traitement de ladite couche de peau avec un plasma ; puis
(c) la métallisation dudit substrat en film traité au plasma avec un métal.

2. Procédé selon la revendication 1, dans lequel ladite couche de peau comprend de l'EVOH et au moins 100 ppm en poids de fluoropolymère.

3. Procédé selon la revendication 1 ou 2, dans lequel ladite couche centrale comprend du polypropylène.

4. Procédé selon l'une quelconque des revendications précédentes, dans lequel l'étape de traitement au plasma est réalisée dans une chambre de métallisation sous vide de l'étape (c).

5. Procédé selon la revendication 4, dans lequel ladite étape de traitement au plasma est réalisée avec de l'azote ou de l'argon ou les deux.

6. Procédé selon l'une quelconque des revendications précédentes, dans lequel ladite couche centrale comprend en outre un agent de cavitation.

7. Procédé selon l'une quelconque des revendications précédentes, dans lequel ladite polyoléfine est du polypropylène.

8. Structure en film produite par le procédé de l'une quelconque des revendications précédentes.

9. Film selon la revendication 8, dans lequel ledit film présente un flux de transmission de l'oxygène mesuré à 22,8°C (73°F), 0% de HR, inférieur d'au moins 1% au flux de transmission de l'oxygène d'un même film sans l'étape de traitement au plasma et un flux de transmission de la vapeur d'eau mesuré à 37,8°C (100°F), 90% de HR, inférieur d'au moins 1% au flux de transmission de la vapeur d'eau d'un même film sans l'étape de traitement au plasma.

10. Film selon la revendication 8 ou 9, dans lequel ledit film présente un flux de transmission de l'oxygène mesuré à 22,8°C (73°F), 0% de HR, égal ou inférieur au flux de transmission de l'oxygène d'un même film sans ledit fluoropolymère et l'étape de traitement au plasma et un flux de transmission de la vapeur d'eau mesuré à 37,8°C (100°F), 90% de HR, égal ou inférieur au flux de transmission de la vapeur d'eau d'un même film sans ledit fluoropolymère et l'étape de traitement au plasma.
